Europäisches Patentamt

European Patent Office

Office européen des brevets

(11) Numéro de publication: **0 461 328 A1**

## DEMANDE DE BREVET EUROPEEN

(21) Numéro de dépôt: 90630120.5

(22) Date de dépôt: **15.06.90**

(51) Int. Cl.5: **E04F 13/08, E04F 15/20,**
**E04B 1/86, B32B 11/04**

(43) Date de publication de la demande:
**18.12.91 Bulletin 91/51**

(84) Etats contractants désignés:
**BE DE ES FR GB GR IT LU**

(71) Demandeur: **TINE HOLDING S.A.**
**37, rue Notre-Dame**
**Luxembourg(LU)**

(72) Inventeur: **L'inventeur a renoncé àsa**
**désignation**

(74) Mandataire: **Waxweiler, Jean et al**
**OFFICE DENNEMEYER S.à.r.l. P.O. Box 1502**
**L-1015 Luxembourg(LU)**

(54) Système d'insonorisation destiné à être utilisé à l'intérieur d'un local.

(57) Système d'insonorisation (1) destiné à être utilisé à l'intérieur d'un local comprenant une couche extérieure (3) assurant la planéité et l'esthétique du système, un matériau absorbant (5) de faible épaisseur et de faible densité, et une couche d'amortissant (4) en matériau visco-élastique chargé à haute densité disposé entre la couche extérieure (3) et le matériau absorbant (5).

Fig. 1

La présente invention concerne un système d'insonorisation destiné à être utilisé à l'intérieur d'un local. Plus particulièrement, l'invention est relative à un panneau acoustique destiné à être appliqué sur une paroi murale, plancher, plafond ou autre, pour assurer l'isolation phonique. Elle concerne également un dispositif de fixation du système d'insonorisation à une paroi.

Qu'il s'agisse des moyens de transport, de l'industrie ou des habitations domestiques, de nombreux domaines d'activité s'intéressent à l'isolation phonique. Dans le cadre des améliorations des conditions de travail ou plus généralement pour améliorer le confort, il est indispensable de réduire la pollution sonore.

Pour suivre l'exemple de l'industrie, bien entendu il faut s'attaquer en premier lieu à la source du bruit, quand cela est possible, et équiper par exemple la machine de silencieux, blocs de suspension élastique ou autres, bien connus de l'Homme de Métier. Toutefois, on arrive bien rapidement a un seuil en deçà duquel on ne peut, économiquement et technologiquement descendre. Il faut alors s'orienter vers la mise en place de carters d'insonorisation ou de barrières anti-bruit dont le rôle est de contenir le bruit.

Si l'on considère les habitations domestiques, le problème de l'insonorisation s'est aggravé, d'une part par suite de l'augmentation de la densité humaine en milieu urbain, et d'autre part, les constructions modernes de surfaces de plus en plus réduites par suite du coût du foncier, font de plus en plus appel à l'emploi de matériaux légers du type de cloison en panneaux de plâtre, carreaux de plâtre, briques creuses, carreaux de ciment ou dalles de béton massives préfabriquées qui n'apportent pas une densité suffisante ou une étanchéité acoustique suffisante. Par ailleurs, les contructions avec ossature en bois sont très sonores notamment aux bruits d'impact et posent des problèmes de mise en oeuvre de revêtements étanches dans les pièces humides.

Essentiellement pour des raisons de confort, il est souhaitable de pouvoir limiter la propagation des sons au travers des parois. Il existe principalement deux techniques, dont la première ne peut être appliquée qu'à des constructions neuves puisqu'il s'agit précisément de construire dès l'origine des cloisons présentant des moyens internes d'isolation phonique. Pour cela, par exemple, on construit une cloison constituée intérieurement de parois multiples séparées par un vide d'air ou un matériau souple. Son efficacité est toute relative et dépend de différents facteurs.

La seconde technique consiste à revêtir une paroi de panneaux acoustiques qui présentent de bonnes propriétés d'isolation phonique. L'avantage de celle-ci est de pouvoir être adoptée pour des constructions existantes et se trouve être la solution la plus économique pour insonoriser les logements ou locaux industriels. Par ailleurs, cette technique offre également l'avantage de pouvoir être mise en oeuvre dans des installations ou bâtiments existants indépendamment de leur construction d'origine.

Différents constructeurs se sont donc spécialisés dans la fabrication de panneaux acoustiques et présentent sur le marché différents produits plus ou moins performants. Ces panneaux acoustiques se caractérisent principalement par le type de matériaux utilisés et les épaisseurs employées.

Pour la réalisation de tels panneaux acoustiques, l'Homme de Métier connait d'adoption de panneaux complexes formés d'un élément de couverture en plâtre recouvrant une épaisseur de matériau absorbant. L'adoption d'un matériau de support souple tel qu'un feutre avec un parement extérieur lourd à base de plâtre ou de plomb donne également satisfaction. Pour le doublage, on connait également les "panneaux sandwiches" composés d'une plaque extérieure en plâtre soit avec une couche de liège expansé soit avec une couche de laine de verre ou de roche.

On peut toutefois reprocher à ces panneaux acoustiques d'être coûteux, d'être lourds et épais lorsqu'ils sont conçus sur le modèle d'un parement massif soutenu par une couche souple de feutre synthétique ou le laine minérale.

Ainsi qu'il est décrit dans la publication FR-A-2 592 669, un système d'isolation acoustique a été développé pour absorber les ondes sonores et pour couvrir les parois murales intérieures ou extérieures. Ce système d'isolation acoustique présente une structure composée de deux couches de liège faible densité ou de polystyrène expansé séparées par une couche en liège haute densité. Les performances du système d'isolation précité sont relativement satisfaisantes mais nécessitent l'utilisation de couches de fortes épaisseurs pour obtenir de bons résultats. De plus, il faut noter que le liège est un matériau très onéreux qui renchérit ce produit. Pour les panneaux composés de laine minérale, le problème résulte plus dans sa mise en oeuvre car ces panneaux sont de grandes dimensions, de poids élevé et de fortes épaisseurs. Les difficultés de mise en oeuvre résultent notamment des constructions verticales où l'acheminement des produits de doublage sur le chantier posent des problèmes certains.

Il est donc clair qu'on a besoin d'un système d'insonorisation destiné à être utilisé à l'intérieur d'un local qui, dans une large mesure, permet de remédier aux insuffisances que l'on a rencontrées dans la technique antérieure.

Par conséquent, un but de la présente invention est de fournir un système d'insonorisation qui offre d'excellentes caractéristiques acoustiques tout en ayant une épaisseur réduite et une grande facilité de mise en oeuvre. En particulier, l'objet de l'invention est de présenter un panneau acoustique peu onéreux et possédant des propriétés acoustiques d'amortissement améliorées.

Un autre but de la présente invention est de présenter un système d'insonorisation qui puisse être mis en oeuvre aussi bien pour assurer l'insonorisation des parois murales que d'un plancher où il faut affaiblir des bruits d'impact ou des bruits aériens.

Un autre objet de l'invention est de fournir un dispositif de fixation pour fixer le système d'insonorisation à une paroi, ce dispositif présentant une anti-conductibilité sonique et une performance excellante à l'arrachement.

Ces buts ainsi que d'autres sont atteints, suivant l'invention, par un nouveau système d'insonorisation destiné à être utilisé à l'intérieur d'un local caractérisé par le fait qu'il se compose d'une couche extérieure assurant la planéité et l'esthétique du système, d'un matériau absorbant de faible densité et d'une couche d'amortissant en matériau visco-élastique chargé à haute densité disposée entre la couche extérieure et l'élément absorbant.

Le système de la présente invention offre d'excellentes caractéristiques d'insonorisation par la combinaison de matériau absorbant et de matériau visco-élastique et une grande facilité de mise en oeuvre. Ces atouts sont: une dimension réduite, une faible épaisseur ce qui facilite, d'une part son acheminement sur le chantier et d'autre part sa mise en oeuvre dans des locaux de petites dimensions où d'espace est précieux, tant en habitation horizontale qu'en habitation verticale.

La technique de fabrication particulière du système d'insonorisation de l'invention lui permet d'être appliqué sans inconvénient sur un support irrégulier. La planéité du revêtement extérieur est malgré tout assurée, ce qui est très appréciable sur le plan de l'esthétique. Il n'est nullement nécessaire de mettre en place un autre revêtement extérieur. La continuité entre les panneaux acoustiques est assurée afin d'obtenir une surface d'ensemble plane et étanche.

D'autres caractéristiques et avantages de la présente invention apparaîtront au cours de la description qui va suivre et qui n'est cependant donnée qu'a titre indicatif.

L'invention sera mieux comprise à la lecture de la description suivante, accompagnée de dessins en annexe, parmi lesquels:

- la figure 1 schématise en vue de coupe les différentes éléments composant un système d'insonorisation pour paroi murale, selon la présente invention.
- la figure 2 schématise en vue de coupe l'architecture interne d'un système d'insonorisation pour plancher selon la présente invention,
- la figure 3 schématise en vue de coupe un dispositif de fixation pour fixer le système d'insonorisation de l'invention à une paroi,
- la figure 4 est une vue latérale du dispositif de fixation de la figure 3,
- la figure 5 est une vue de dessus du dispositif de fixation de la figure 3,
- la figure 6 est vue semblable à celle illustrée en figure 3, mais illustre une variante du dispositif de fixation,
- la figure 7 est un graphique illustrant les caractéristiques d'une cloison de référence,
- la figure 8 est un graphique illustrant la comparaison entre les caractéristiques obtenues avec le système d'insonorisation pour paroi de l'invention et celles obtenues sans celui-ci,
- la figure 9 est un graphique illustrant les caractéristiques d'un plancher de référence, et
- la figure 10 est un graphique illustrant la comparaison entre les caractéristiques obtenues avec plusieurs systèmes d'insonorisation pour plancher de l'invention et celles obtenues sans ceux-ci.

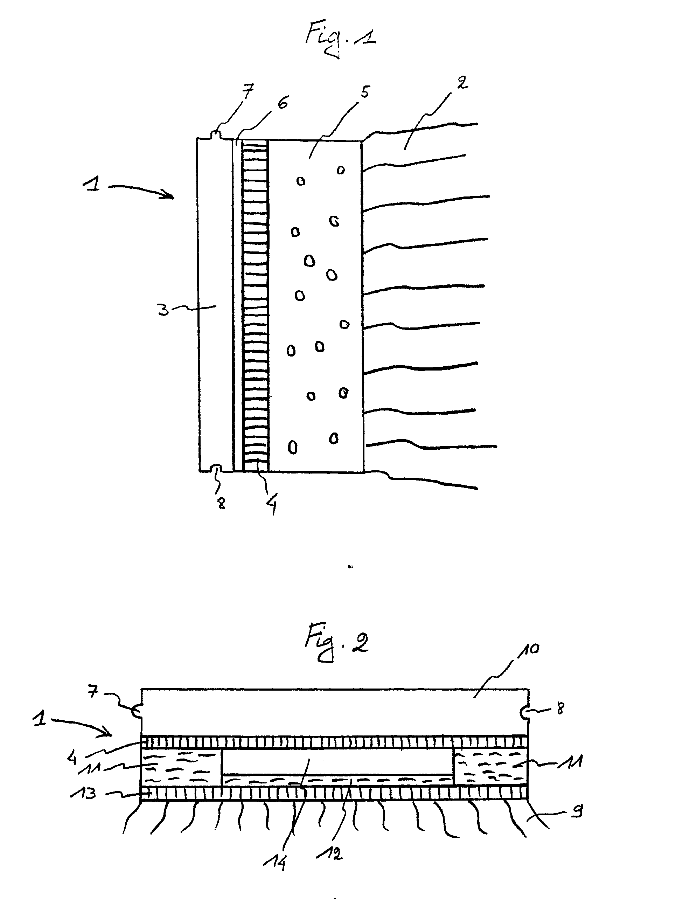

La figure 1 schématise la mise en place d'un panneau acoustique 1 selon la présente invention sur une paroi existante 2 . Dans l'exemple choisi, il s'agit d'une paroi murale.

En ce qui concerne sa constitution, le panneau acoustique 1 de la figure 1 se compose d'un parement extérieur 3 assurant la planéité du revêtement et la continuité au niveau du raccordement des différents panneaux acoustiques.

Sous ce parement extérieur 3 se trouve une couche d'amortissant 4 de faible épaisseur en produit visco-élastique. Cet amortissant 4 est destiné à amortir les sons; son rôle sera examiné plus en détails par la suite.

Une couche de matériau souple, absorbant 5 est fixée sur la paroi 2 et assure le soutien de l'amortissant 4 et du parement extérieur 3 . La fonction de cette couche de matériau absorbant est double puisque, en outre, elle assure l'isolation phonique du panneau 1 et cette couche souple permet de compenser les déformations éventuelles du support, de la paroi murale 2 .

L'isolation acoustique d'une paroi correspond à son aptitude à ne pas transmettre les sons qui viennent percuter l'une de ses faces. Cette propriété se concrétise par une combinaison des deux formes suivantes, la cloison réfléchi les sons qui viennent la percuter et la cloison absorbe les sons.

La première solution pour obtenir une cloison très isolante consiste à utiliser des matériaux massifs pour la construction. En effet, le poids constitue le principal facteur d'insonorisation.

La seconde technique consiste à utiliser une double paroi comme c'est le cas dans la présente invention. La première paroi est constituée de l'assemblage du parement extérieur 3 doublé d'un amortissant 4 , alors que la seconde est constituée par la paroi murale 2 . Les deux éléments sont séparés dans le cas présent par l'élément de suspension 5 qui joue le rôle d'un ressort. La souplesse du matériau 5 rend indépendante la paroi murale 2 vis-à-vis de l'amortissant 4 doublé du parement extérieur 3 .

Le panneau acoustique de la présente invention dispose en particulier d'une capacité d'amortissment élevée, grâce à la présence de la couche d'amortissant 4 . Comme cela a été précisé précédemment, une cloison peut plus ou moins absorber ou réfléchir les sons. Dans le cas présent, il a été choisi une forte absorption, c'est-à-dire que les vibrations de la paroi cessent presque en même temps que l'excitation. Il s'agit d'une propriété des produits visco-élastiques qui sont aptes à dissiper une grande quantité d'énergie par des processus de frottement interne lorsqu'ils sont soumis à des vibrations mécaniques. La capacité d'amortissement d'un matériau dépend principalement de son module d'Young (E) qui s'exprime en décaNewton par centimètre carré (daN/cm2).

En ce qui concerne l'amortissant 4 , le produit visco-élastique préconisé pour sa fabrication est une feuille de bitume chargé à haute densité. A titre indicatif, il est souhaitable d'adopter une densité variant de 5 kg/m2 à 15 kg/m2 pour une épaisseur variant entre 2.5 mm et 7,5 mm. De bons résultats ont été obtenus en utilisant un amortissant 4 composé de bitume, de charges minérales et de caoutchouc, le caoutchouc pouvant être remplacé par un autre liant de synthèse, cet amortissant ayant une masse volumique de l'ordre de 2000 kg/m3. Toutefois,

l'utilisation d'un amortissant de densité différente peut également être envisagée.

En principe, le parement extérieur 3 ne joue qu'un rôle de planéité et de masse et son choix se fera en fonction du problème à traiter. A titre d'exemple, le parement extérieur 3 peut être un revêtement de feuilles de plâtre, d'aggloméré de bois, ou autres.

Pour le matériau souple absorbant 5 le choix peut être porté sur une mousse isolante en polyuréthane expansé, ou en fibre naturelle moulée recalibrée. A titre indicatif, il peut s'agir d'une mousse présentant une densité de 30 g/l avec une épaisseur préconisée de 28 mm. Ceci permet de créer un panneau acoustique de très faible épaisseur. Le choix de matériau absorbant peut également être porté sur une mousse souple à base de résine mélamine d'une densité de l'ordre de 50 kg/m3.

Un adhésif assurera la cohésion des différentes couches.

Avantageusement, l'amortissant 4 sera doublé d'une feuille d'aluminium 6 dont le rôle est d'apporter une amélioration à la résistance au feu.

Par ailleurs, un film plastifié, par exemple un film de polyuréthane, sera de préférence fixé sur la couche d'absorbant 5 en mousse, ou un film en non tissé en fibre naturelle pour faciliter sa fixation sur la paroi murale 2. Le choix peut être porté sur un film en non tissé composé de 50% de polyester et de 50% de viscose avec endos thermoplastique.

Le parement extérieur 3 comporte sur sa périphérie des moyens d'emboîtement avec le panneau voisin, ce qui permet d'assurer une étanchéité et une continuité à l'ensemble des panneaux acoustiques mis en place. A titre d'exemple, ces moyens se présentent sous la forme d'une combinaison de languettes 7 usinées dans le panneau ou apportées, et de rainures 8 emboîtables. Un tel assemblage permet d'éviter les fuites acoustiques. Le panneau acoustique obtenu selon cette technique de construction est maniable par son

format (épaisseur inférieure à 5 cm) et par son poids (environ 15 à 25kg/m2).

Par ailleurs, l'assemblage de deux panneaux entre eux permet d'obtenir une cloison séparative entre pièces et modulables dans le temps.

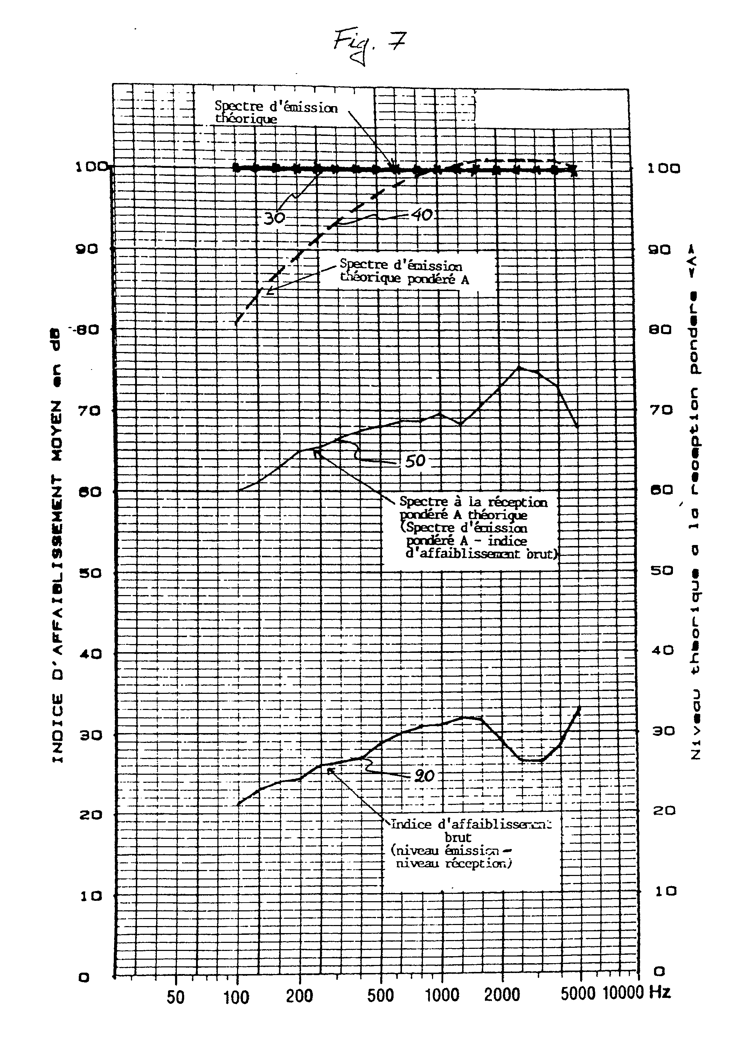

La figure 7 est un graphique illustrant les mesures effectuées en chambre réverbérante conformément à la norme francaise NFS 31051. Les locaux sont séparés par une paroi possédant un isolement acoustique supérieur à 55 dB(A) dans lesquels une ouverture de 1m20 sur 2m a été effectuée. Dans cette ouverture une cloison de référence "placopan" a été mesurée, cette cloison de référence étant d'une épaisseur totale de 5 cm et composée de deux plaques de plâtre de 1 cm séparées par un carton en nid d'abeilles.

Les mesures sont acquises sur un analyseur, en temps réel, 1/3 octave; les calculs et les tracés sont effectués par un ordinateur, pilotant une table traçante. Le programme nécessaire à ce dépouillement a été spécialement réalisé pour cette étude. Les formules prises comme références sont celles indiquées ci-dessous. Il est à noter que les mesures ont été effectuées en inversant le rôle des deux salles qui deviennent successivement réceptrices, puis émettrices. L'indice d'affaiblissement en incidence diffuse peut être évalué par la formule suivante:

R (dB) = L1 - L2 + 10 1g (S/A)

dans laquelle, pour chaque bande de fréquence,
L1 est le niveau de pression acoustique à l'émission,
L2 est le niveau de pression acoustique à la réception,
S est la surface de l'échantillon,
A est l'aire d'absorption équivalente à la salle de réception,
dans laquelle

$$A = \frac{0,16 \ V}{T}$$

V est le volume de la salle de réception en m3,
T est la durée de réverbération moyenne en secondes.

Suivant la figure 7, la courbe de graphique désignée par la référence numérique 20 représente l'indice d'affaiblissement brut en décibel, obtenu par différence entre le niveau sonore mesuré côté émission et le niveau sonore obtenu dans la salle de réception (corrigé en fonction du temps de réverbération de la salle de réception).

Si l'on admet un spectre d'émission théorique plat représenté par la référence 30 (100 dB x 1/3 octave = 111 dB (A)) et que l'on pondère "A" ce spectre, on obtient le spectre d'émission théorique pondéré "A" représenté par la référence numérique 40.

De ce spectre pondéré "A" il est possible de soustraire l'indice d'affaiblissement brut afin d'obtenir le spectre théorique à la réception pondéré "A" représenté par la référence numérique 50. Ce dernier spectre offre l'avantage de connaître directement les fréquences qui dictent le niveau global à la réception.

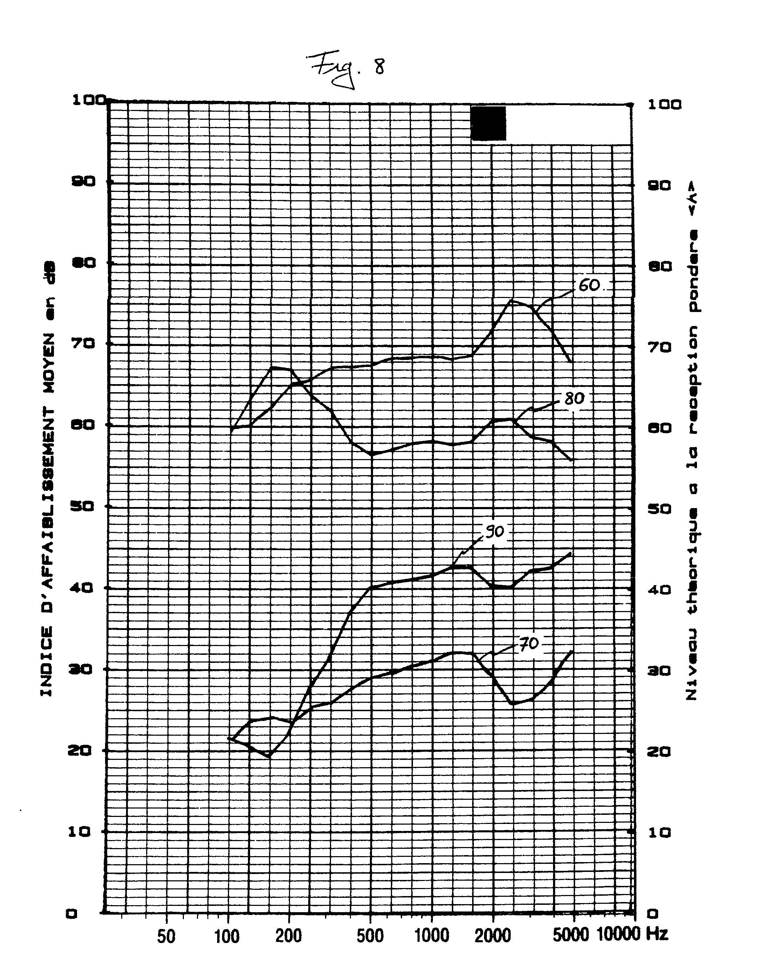

Les résultats qui peuvent être atteints par l'utilisation du système d'insonorisation pour paroi murale selon l'invention sont représentés par les graphiques de la figure 8 illustrant l'indice d'affaiblissement moyen en db et le niveau théorique à la réception pondéré "A" en db (A) par rapport à la fréquence. Les spectres représentés par les références 60 et 70 indiquent les résultats obtenus pour une paroi "placopan" tandis que les spectres représentés par les références 80 et 90 indiquent les résultats obtenus pour la paroi "placopan" renforcée par le système d'insonorisation de l'invention. Les matériaux utilisés et les résultats de laboratoire pour cet essai sont décrits plus en détail ci-dessous.

Descriptif des matériaux:

**Cloison "Placopan":**
double panneau de plâtre de 1cm d'épaisseur séparés par une structure en carton nid d'abeille d'épaisseur 3cm.
Epaisseur totale: 5cm **Insonorisation:**
Panneau de contreplaqué de 5mm d'épaisseur,
Amortissant de 5kg/m2, épaisseur 2,5mm,
Mousse de polyuréthane 30g/l, épaisseur 28mm,
Epaisseur: 35,5mm

Résultats

**Indice d'affaiblissement**
- Cloison sans renfort: 28,7 dB (A)
- Cloison avec renfort: 36,8 dB (A)
**Gain obtenu:** 8,1 dB (A)

D'après la figure 8 et les résultats ci-dessus, l'homme de métier sera à même de comprendre que le système d'insonorisation de l'invention fournit un perfectionnement sensible par rapport à une paroi qui en est démunie.

Avec le panneau acoustique de la présente invention on obtient un produit à la fois plus performant sur le plan de l'isolation phonique et beaucoup plus commode dans sa mise en oeuvre. En particulier, le panneau est de faible épaisseur, il peut donc être installé dans des pièces de petites dimensions sans réduire sensiblement le volume habitable. En outre, il peut être installé sur des parois présentant des défauts de planéité. Sur le plan de l'esthétique, le panneau acoustique de la présente invention permet d'obtenir en surface une planéité parfaite avec une continuité étendue.

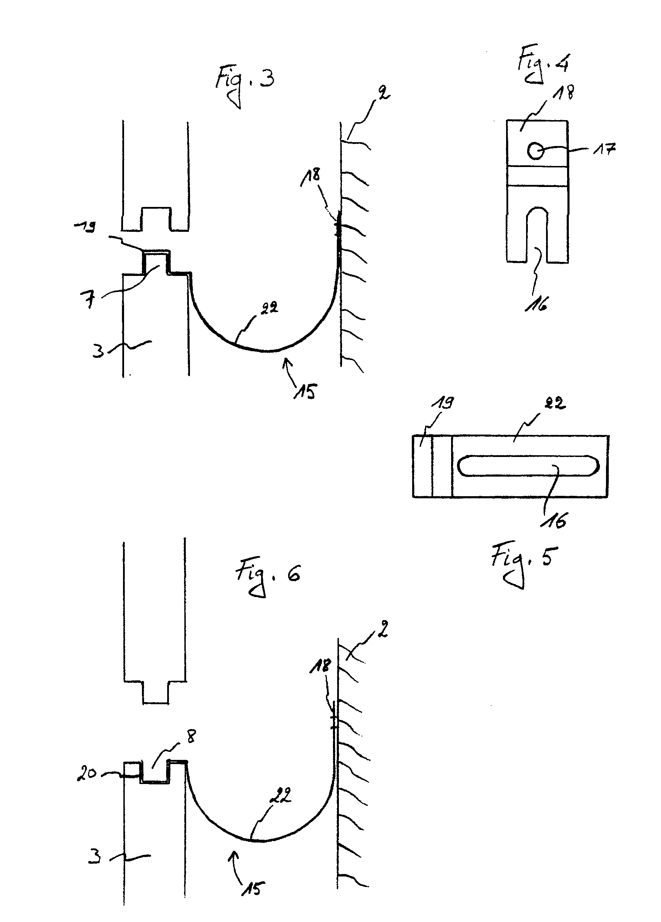

Les figures 3 à 6 illustrent un dispositif de fixation 15 pour fixer le système d'insonorisation à une paroi 2, ce dispositif présentant une anti-conductibilité sonique et une performance excellente à l'arrachement.

Le dispositif de fixation 15 est fabriqué en acier S d'une épaisseur de 0.6mm à 1mm. Ce dispositif 15 se présente sous forme d'une patte 22 en arc de cercle formée suivant les critères d'anti-conductibilité sonique et de résistance à l'arrachement. Comme on peut le voir aux figures 4 et 5. Cette patte d'acier 22 d'une largeur de l'ordre de 15 mm est évidée en son milieu 16 en vue de former une coulisse, de faible conductibilité sonique. Sur une extrémité 18 des deux extrémités non symétriques 18 et 19 on perce en son centre un évidement pour permettre la fixation par chevillage à la paroi 2. Cet évidement 17 est positionné à une hauteur supérieure par rapport au moyen de fixation 19 ou 20 sur le panneau acoustique en vue de faciliter la pose. Cet évidement 17 sera isolé du chevillement par un cylindre-bloc (non-illustré) en caoutchouc, ou en matériaux de synthèse appropriés à l'isolement sonique; complément direct de la coulisse.

Comme on peut le voir aux figures 3 et 6, pour la fixation du panneau le dispositif 15 présente un système d'accrochage à emboîtement femelle 19 pour la pose sur la languette 7 du parement extérieur 3 du panneau ou d'un système d'accrochage mâle 20 pour la pose dans la rainure 8 du parement extérieur 3 du panneau.

Par ailleurs en augmentant le rayon de l'arc de cercle de la patte 22 on peut obtenir une dimension adéquate permettant la pose d'une couche de matériau absorbant suffisante et, si nécessaire, d'un vide d'air procurant à l'ensemble une réduction efficace aux bruits aériens et aux bruits d'impact.

Pour une application à un plancher et obtenir notamment une bonne insonorisation des bruits de pas, quelques modifications devraient être apportées. En particulier, on ne peut utiliser une liaison totalement souple entre parement, et support.

La figure 2 représente un système d'insonorisation 1 spécialement étudié pour insonoriser un plancher 9. Les bruits de pas sur un plancher sont engendrés par le choc au contact du sol. Un choc provoque une vibration non entretenue, aussi at'on intérêt à utiliser des matériaux présentant un fort degré d'amortissement pour réduire au maximum la durée de la vibration. De manière similaire au sytème d'insonorisation illustré en figure 1, ce système particulier pour insonoriser un plancher comporte une couche extérieure 10, un élément en matériau absorbant 12 et une couche d'amortissant 4 intermédiaire.

Dans l'exemple choisi, on utilise un revêtement extérieur 10 qui pourra, par exemple être une plaque de bois, à même à supporter mécaniquement les efforts extérieurs, qui est doublé d'une couche d'amortissant 4 à fort pouvoir amortisseur. En particulier, on pourra utiliser encore une fois d'une feuille de bitume chargée de bonne densité et de faible épaisseur. Dans l'exemple de réalisation de la figure 2, le revêtement extérieur 10 et l'amortissant 4 sont supportés par des cales 11 qui s'appuient sur le sol 9. Ces cales de support 11 sont de préférence fabriquées en fibres végétales, telles que des fibres de coco compressées. On peut également utiliser des cales en liège. Ces matériaux présentent de bonnes propriétés de compromis pour, à la fois supporter les contraintes mécaniques de compression avec une tenue suffisante et permettre une certaine souplesse pour ne pas lier rigidement l'amortissant 4 et le revêtement 10 avec le sol 9.

Le vide d'air 14 situé sous l'amortissant 4 a été comblé partiellement, de l'ordre de 30% avec un feutre textile 12 qui présente un bon pouvoir d'absorption. On peut encore renforcer l'insonorisation du panneau acoustique 1 de la figure 2 en disposant un second amortissant 13 directement sur le plancher 9. On alourdit ainsi artificiellement la cloison et on améliore son insonorisation.

Dans une autre forme de réalisation particulière (non-illustrée) de l'invention une couche d'amortissant en bitume accollé à une feuille de carton de forte densité à été utilisée en combinaison avec une couche d'absorbant en feutre de fibres minérales de très faible épaisseur muni d'une mousse antidérapante permettant la pose de revêtements divers. Cette forme de réalisation offre l'avantage d'être de très faible épaisseur et ne nécessite pas l'utilisation de cales de support.

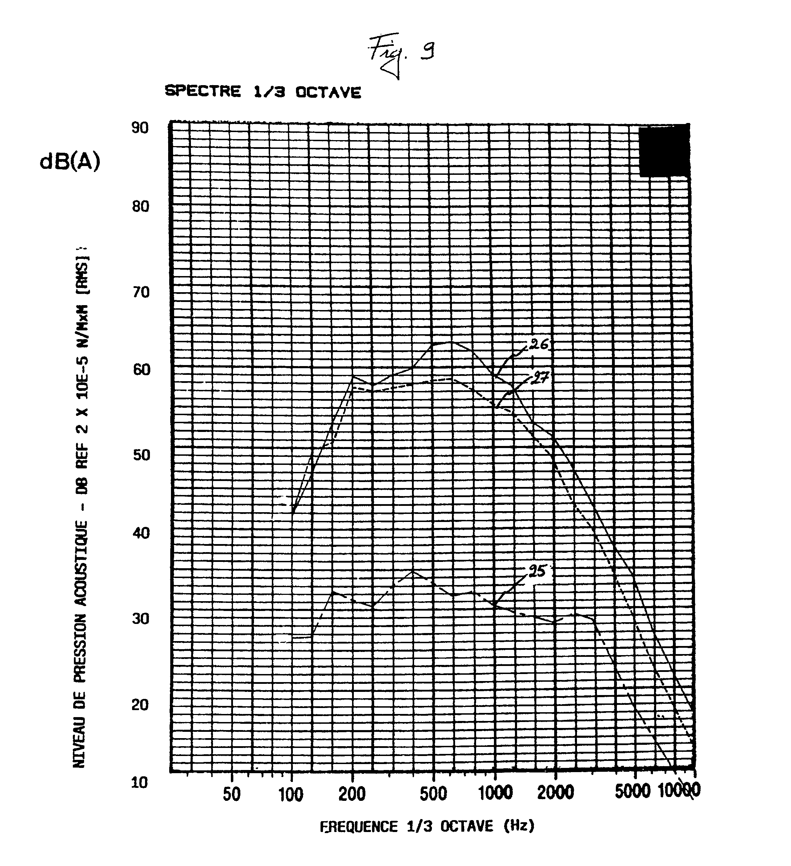

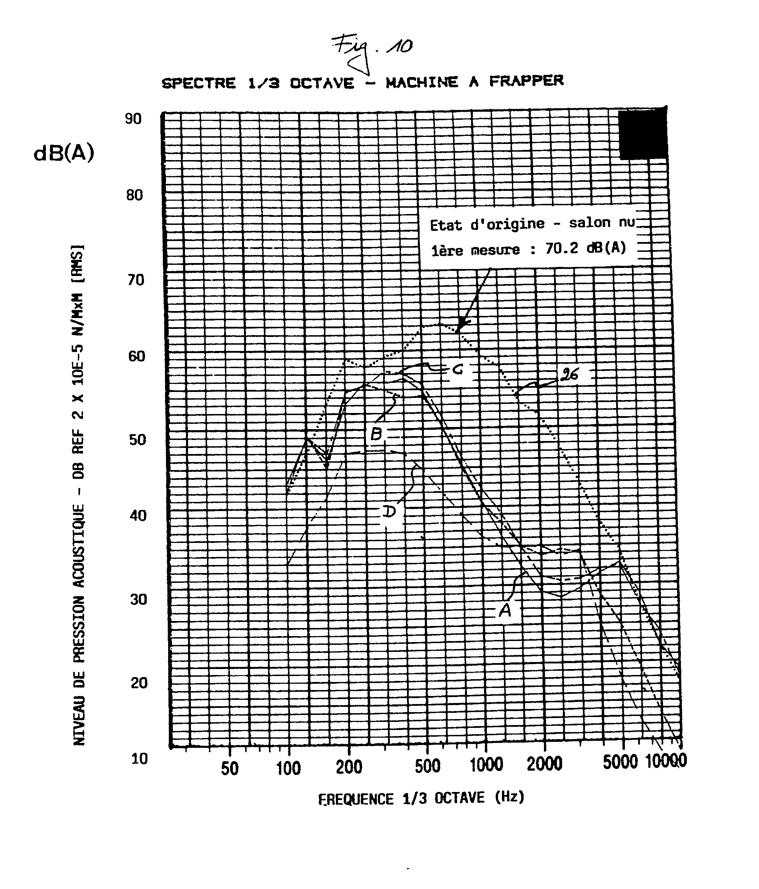

Les figures 9 et 10 illustrent des mesures du niveau de pression acoustique qui ont été effectuées in situ avec une machine à frapper normalisée, le plancher existant étant composé d'un parquet bois sur solives, un vide d'air partiellement comblé au plâtre et un surfaçage inférieur plâtré.

Suivant la figure 9, la courbe désignée par la référence numérique 25 représente le bruit de fond et les courbes désignées par les références numériques 26 et 27 représentent respectivement les première et seconde mesures de l'état d'origine avec la machine à frapper.

Les résultats qui peuvent être atteints par l'utilisation du système d'insonorisation pour plancher de l'invention sont illustrés par les courbes de la figure 10 illustrant le niveau de pression acoustique par rapport à la fréquence. Pour chacun des essais suivants, une double couche d'amortissant d'épaisseur

EP 0 461 328 A1

5mm et de densité 10 kg/m2 séparée par un absorbant a été utilisée en combinaison avec un panneau d'aggloméré bois de 17 mm d'épaisseur et de densité 700 kg/m3. Des cales de support en fibres végétales de type coco compressées sur 30% de la surface ont également été utilisées.

ESSAIS

| Courbes (Figure 10) | Absorbant utilisé |
|---|---|
| A: | Feutre laissant un vide d'air de 50% entre feutre et amortissant. |
| B: | Liège de 1 cm d'épaisseur |
| C: | Liège de 2 cm d'épaisseur |
| D: | Fibres naturelles de coco précomprimées, épaisseur 2cm. |

| Résultats: | 1ère mesure | 2ème mesure | |
|---|---|---|---|
| Avant insonorisation | 70, 2 | 67, 2 | dB(A) |
| Après insonorisation | 54, 7 | 54, 7 | dB(A) |
| Gain obtenu | 15, 5 | 12, 5 | dB(A) |

D'après ces résultats, l'isolation acoustique aux bruits d'impact et aux bruits aériens est très importante avec le dispositif d'insonorisation pour plancher selon l'invention pour une épaisseur restant faible.

D'autres formes de réalisation de la présente invention, à la portée de l'Homme de Métier, auraient également pu être envisagées sans pour cela sortir du cadre de celle-ci.

**Revendications**

1. Système d'insonorisation destiné à être utilisé à l'intérieur d'un local comprenant une couche extérieure (3,10) assurant la planéité et l'esthétique du système et un matériau absorbant (5,12) de faible densité, caractérisé par une couche d'amortissant (4) en matériau visco-élastique chargé à haute densité disposé entre la couche extérieure (3,10) et le matériau absorbant (5,12).

2. Système d'insonorisation suivant la revendication 1, caractérisé en ce que la couche d'amortissant (4) est une feuille composée de bitume, de charge minérale et de caoutchouc.

3. Système d'insonorisation suivant l'une des revendications 1 et 2, caractérisé en ce que la densité de la couche d'amortissant (4) varie de 5kg/m2 à 15kg/m2 et l'épaisseur de la couche d'amortissant varie entre 2.5 mm et 7,5 mm.

4. Système d'insonorisation suivant l'une des revendications 1 à 3, caractérisé en ce que le matériau absorbant (5,12) est une mousse isolante en polyuréthane expansé.

5. Système d'insonorisation suivant l'une des revendications 1 à 4, caractérisé en ce que la densité du matériau absorbant (5,12) est de 30g/l est son épaisseur est de 28 mm.

6. Système d'insonorisation suivant l'une des revendications 1 à 3, caractérisé en ce que le matériau absorbant (5,12) est une mousse isolante en fibre naturelle, moulée, recalibrée et surfacée avec un non tissé en fibre naturelle.

7

EP 0 461 328 A1

**7.** Système d'insonorisation suivant l'une des revendications 1 à 3, caractérisé en ce que le matériau absorbant (5,12) est une mousse souple à base de résine mélamine et sa densité est de 50g/l.

**8.** Système d'insonorisation suivant l'une des revendications 1 à 7, caractérisé en ce que la couche d'amortissant (4) est doublée d'une feuille d'aluminium (6) et un film plastifié, de préférence en polyuréthane, est fixé sur la couche d'absorbant (5,12) du côté de la paroi (2).

**9.** Système d'insonorisation suivant l'une des revendications 1 à 8, caractérisé en ce que la couche extérieure (3,10) comporte sur sa périphérie des moyens d'emboîtement (7,8), ces moyens se présentant sous la forme de languettes (7) et de rainures (8) usinées dans la couche extérieure (3,10) et emboîtables.

**10.** Système d'insonorisation suivant l'une des revendications 1 à 9, caractérisé en ce que la couche extérieure (10) et la couche d'amortissant (4) sont supportés par des cales (11), ces cales de support (11) étant de préférence en fibres de coco compressées ou en liège.

**11.** Système d'insonorisation suivant la revendication 10, caractérisé en ce que le vide d'air (14) situé sous la couche d'amortissant (4) entre les cales de support (11) est comblé partiellement avec le matériau absorbant (12).

**12.** Sytème d'insonorisation suivant l'une des revendications 10 et 11, caractérisé en ce que le matériau absorbant (12) est un feutre textile, ou un feutre en fibres naturelles de coco précomprimées, ou du liège.

**13.** Dispositif de fixation pour fixer le système d'insonorisation suivant l'une des revendications 1 à 12 à une paroi (2), caractérisé en ce que ce dispositif (15) comprend une patte (22) évidée en son milieu (16) en vue de former une coulisse de faible conductibilité sonique, l'une (18) des extrémités (18,19) comportant un évidement (17) pour permettre la fixation à la paroi (2) et l'autre extrémité présentant un moyen d'accrochage (19,20) pour la fixation à la couche extérieure (3) du système d'insonorisation.

**14.** Dispositif de fixation suivant la revendication 13, caractérisé en ce que la patte (22) est en forme d'arc de cercle et l'évidement (17) est positionné à une hauteur supérieure par rapport au moyen d'accrochage (19,20) en vue de faciliter la fixation à la paroi (2).

**15.** Dispositif de fixation suivant l'une des revendications 13 et 14, caractérisé en ce que le moyen d'accrochage (19,20) se présente sous la forme d'un emboîtement femelle (19) pour la pose sur la languette (7) du parement extérieur (3) ou sous la forme d'un emboîtement mâle (20) pour la pose dans la rainure (8) du parement extérieur (3).

**16.** Dispositif de fixation suivant l'une des revendications 13 à 15, caractérisé en ce que l'évidement (17) est fixé par chevillage à la paroi (2) et est isolé du chevillement par un cylindre-bloc en caoutchouc ou en matériaux de synthése appropriés à l'isolement sonique.

8

Fig. 1

Fig. 2

Fig. 3

Fig. 4

Fig. 6

Fig. 5

Fig. 7

Fig. 8

Fig. 9

SPECTRE 1/3 OCTAVE

_Fig. 10_

SPECTRE 1/3 OCTAVE - MACHINE A FRAPPER

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | NL-A-8 103 017  (NORD BITUMI DI MARCO DANESE & CO.)<br>* Page 5, ligne 14 - page 7, ligne 1; figure 1 * | 1,4-6 | E 04 F  13/08<br>E 04 F  15/20<br>E 04 B   1/86<br>B 32 B  11/04 |
| Y | | 2,3,7,8 | |
| Y | GB-A-2 041 291  (CHEMIE WERK WEINSHEIM GmbH)<br>* Page 1, lignes 94-105; page 2, lignes 5-26; revendication 3; figure * | 2,3,7 | |
| Y,D | FR-A-2 592 669  (NONY & TANCHOU)<br>* Page 5, ligne 11 - page 9, ligne 16; page 9, ligne 26 - page 10, ligne 4; figures 1-4 * | 8 | |
| A | | 1,9,10 | |
| A | FR-A-1 559 200  (BOSTIK S.A.)<br>* Page 2, colonne 2, paragraphe 2; page 2, colonne 2, paragraphe 4 - page 3, colonne 1, paragraphe 1 * | 2 | |
| A | EP-A-0 314 339  (BPB INDUSTRIES)<br>* Colonne 3, ligne 39 - colonne 4, ligne 6; figure 1 * | 10-12 | DOMAINES TECHNIQUES RECHERCHES (Int. Cl.5)<br><br>E 04 F<br>E 04 B<br>B 32 B |
| A | US-A-3 499 255  (SWEENEY & EBERHART)<br>* Colonne 3, lignes 46-53; figures 1-4 * | 10 | |
| A | DE-A-3 108 509  (RIGIPS GmbH)<br>* Page 6, lignes 3-8 * | 10,12 | |

-/-

Le présent rapport a été établi pour toutes les revendications

| Lieu de la recherche | Date d'achèvement de la recherche | Examinateur |
|---|---|---|
| LA HAYE | 24-08-1990 | KAPPOS A. |

Office européen
des brevets

**RAPPORT DE RECHERCHE EUROPEENNE**

Numero de la demande

EP   90 63 0120

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 143 498  (MARTIN & RICHTER)<br>* Colonne 4, lignes 51-60; figures 4-6 * | 13,14 | |
| A | EP-A-0 060 567  (M. & R. DICK GmbH)<br>* Page 7, ligne 1 - page 8, ligne 14; figure 1 * | 13,16 | |
| A | US-A-3 740 913  (J.E. MUSSER)<br>* Colonne 2, lignes 5-17; figures 5-7,10 * | 15 | |

DOMAINES TECHNIQUES RECHERCHES (Int. Cl.5)

Le présent rapport a été établi pour toutes les revendications

| Lieu de la recherche | Date d'achèvement de la recherche | Examinateur |
|---|---|---|
| LA HAYE | 24-08-1990 | KAPPOS A. |